# EUROPÄISCHE PATENTSCHRIFT

(11) **EP 0 678 464 B1**
(45) Veröffentlichungstag und Bekanntmachung des Hinweises auf die Patenterteilung: **09.12.1998**
(21) Anmeldenummer: 95103903.1
(22) Anmeldetag: 17.03.1995
(51) Int. Cl.: B65G 47/52, B65G 15/62

(54) **Bandförderer mit Ein- und Ausschleuseinrichtung**
Belt conveyor with a loading and unloading device
Convoyeur à band avec dispositif pour chargement et déchargement

(30) Priorität: 19.04.1994 DE 4413137
(43) Veröffentlichungstag der Anmeldung: 25.10.1995
(73) Patentinhaber: TRANSNORM SYSTEM GmbH, 31177 Harsum (DE)
(72) Erfinder: Warnecke, Karl, D-31079 Sibbesse (DE)
(74) Vertreter: Arendt, Helmut, Dipl.-Ing.

(56) Entgegenhaltungen:
- DE-A- 2 321 535
- DE-A- 3 610 544

## Beschreibung

Die Erfindung betrifft einen Bandförderer mit einer Einrichtung zum Ein- und Ausschleusen von Fördergut unter einem spitzen Winkel in die Förderstrecke des Bandförderers unter Verwendung von starren Umlenkstäben, um welche ein endloser Ein- und Ausschleusgurt mit seinem Ober- und Untertrum geführt und umgelenkt wird.

Zum Ein- und Ausschleusen von Fördergut in und aus Förderstrecken von Bandförderern werden als Ein- oder Ausschleuszwickel bezeichnete Einrichtungen verwendet. Es sind Endlosbänder, die unter einem spitzen Winkel das Fördergut in die Forderstrecke des Hauptförderbandes transportieren oder aus dieser übernehmen. Parallel zum Hauptförderer sind Umlenkstäbe angeordnet, um welche das Förderband des Zwickels gezogen wird. Dadurch kann der Umlenkradius sehr klein gehalten und die Übergabe des Fördergutes auf das Hauptförderband nahezu stufenlos geschehen.
Da der Endlosgurt des Ein- und Auslaufzwickels aus einem Ober- und Untertrum besteht, sind die Umlenkstäbe paarweise übereinandergesetzt. Der Antrieb ist als Kopfantrieb ausgebildet, dem am anderen Ende eine Umlenkrolle gegenübersteht. Durch die Gurtspannung treten an den Umlenkstäben hohe Reibungskräfte auf. Diese führen insbesondere bei höheren Geschwindigkeiten zu einer großen Erwärmung, so daß die Gurtgeschwindigkeit und auch die Breite eines Gurtzwickels sehr begrenzt sind. Eingurtzwickel werden bislang nur mit einer Nennbreite bis zu 800 mm hergestellt.

Um Abhilfe zu schaffen, sind Mehrgurtzwickel entwickelt worden, die aus schmalen, parallel nebeneinander angeordneten Gurten bestehen. Die Umlenkung der einzelnen, parallelen Bänder an der übergabestelle zum Bandförderer geschieht durch Kopfumlenkungen. Nachteilig ist der hohe technische Aufwand und das Entstehen von dreieckförmigen Lücken zwischen den Enden der einzelnen Zwickelbänder und der Hauptgurtkante. Diese Lücken werden umso größer, je spitzer der Einschleuswinkel zwischen Zwickel und Hauptfördergurt ist.

Der Erfindung liegt die Aufgabe zugrunde, einen Bandförderer mit einer Einrichtung zum Ein- und Ausschleusen von Fördergut nach dem eingangs genannten Gattungsbegriff zu schaffen, der in der Lage ist, Fördergut mit höheren Geschwindigkeiten zu übernehmen. Die Erfindung zur Lösung dieser Aufgabe zeichnet sich dadurch aus, daß die Querschnitte der Umlenkstäbe polygonal sind und der Antrieb des Ein- und Ausschleusgurtes als Kopfantrieb mit einer zylindrischen Antriebstrommel ausgebildet ist, wobei der Umschlingungswinkel des Gurtes auf der Antriebstrommel größer als 180 ° ist.

Durch die vieleckige Ausführung wird die Reibungswärme erheblich reduziert, da zwischen Gurt und Stäben nur Linienkontakte bestehen. Gleichzeitig haben die Luftpolster zwischen den Kanten einen Lüftungseffekt- und einen reibungsmindernden Schmiereffekt. Die Wirkung dieses Schmiereffektes ist jedoch nur bei einer geringen Gurtspannung wirksam, wobei dann nur bei einem sehr großen Umschlingungswinkel des Gurtes auf der Antriebsrolle von mehr als 180 ° für eine ausreichende Traktion gesorgt ist.

Ein weiterer Vorteil ist durch die massive Ausführung der Mehrkantstäbe gegeben, da die nicht vollständig vermeidbare Reibungswärme eine gute Ableitung findet.

Um den gewünschten, hohen Umschlingungswinkel zu erreichen, wird der Gurt über eine der Antriebstrommel benachbarte Umlenkrolle, eine sogenannte "Back-up-Rolle" geführt. Diese Rolle drückt den Gurt mit dem gewünschten Umschlingungswinkel ohne Spannung an die Oberfläche der Antriebstrommel. Dadurch wird zunächst nur an der Anpreßstelle, also linienförmig, die für die Gurttraktion notwendige Normalkraft erzeugt. Bei Rotationsbeginn der Antriebstrommel entsteht an der gesamten, vom Gurt ohne Spannung erfaßten Oberfläche ebenfalls die notwendige Haftreibung zur Gurttraktion, und zwar unter sehr geringer Gurtspannung. Die fast fehlende Gurtspannung führt zu einer beträchtlich verringerten Wärmeentwicklung und ermöglicht eine geringere Antriebsleistung im Vergleich mit Auslaufzwickeln üblicher Konstruktion.

Die erfindungsgemäße Ausführung ermöglicht die Ein- und Ausschleusung von Fördergut unter einem spitzeren Winkel als bei bisher bekannten Zwickeln in Eingurtausführung. Die Winkel können auf unter 45 ° bis etwa 25 ° verkleinert werden. Die in Hauptförderrichtung weisende Geschwindigkeitskomponente wird größer, so daß höhere Einschleusgeschwindigkeiten erreichbar sind. Es ergibt sich eine günstigere Übergabe bei Verwendung nur eines Gurtes anstelle der sonst üblichen Riementeilung für Zwickelgurte.
Die Besonderheit der Konstruktion des Zwickels und die gewählten Materialpaarungen - Kopftrommel aus Stahl mit aufvulkanisiertem, elastomerem Material in Verbindung mit einer geeigneten Oberfläche des Bandförderers - erlauben hohe Geschwindigkeiten bis zu 3 m/sec für den Zwickelgurt und große Nennbreiten bis zu 1500 mm.

Weitere, den Erfindungsgegenstand vorteilhaft gestaltende Merkmale sind in den Ansprüchen angegeben. Alle zusammen ermöglichen eine optimale Übergabe bei erhöhten Ein- bzw. Ausschleusgeschwindigkeiten.

In der Zeichnung ist ein Ausführungsbeispiel der Erfindung schematisch dargestellt und nachstehend erläutert. Es zeigen:

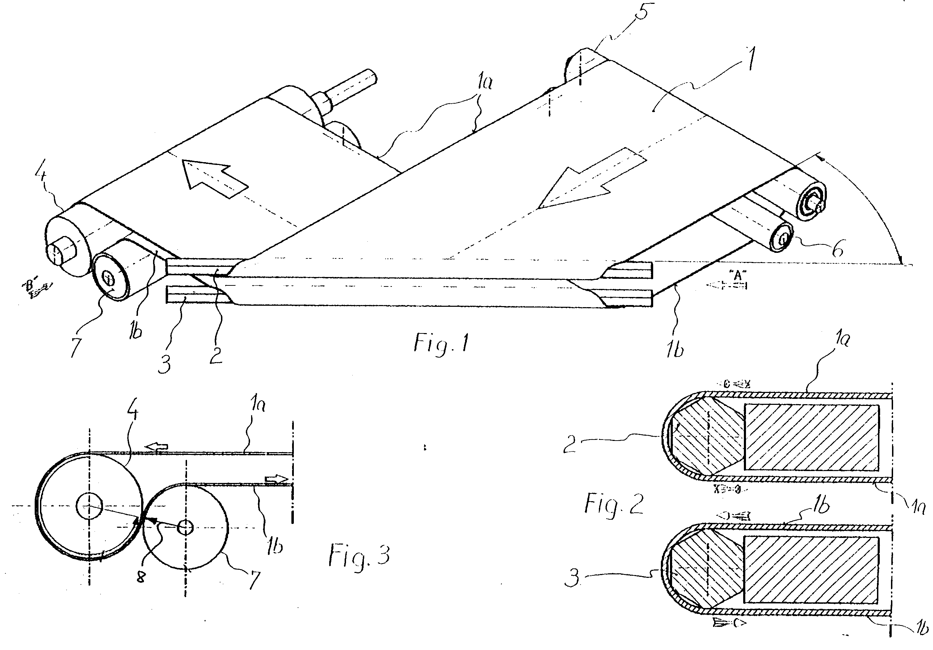

- Figur 1: eine perspektivische Übersichtsskizze eines Einschleuszwickels,
- Figur 2: einen Querschnitt durch die Umlenkstäbe mit aufgelegtem Gurt und
- Figur 3: die Anordnung der Antriebstrommel in Verbindung mit einer benachbarten Umlenkrolle.

Der Einschleuszwickel besteht aus einem Endlosgurt 1 mit einem Obertrum 1a und einem Untertrum 1b. Der Obertrum 1a wird an einem Sechskantstab oder Sechskantmesser 2 in Richtung der Antriebstrommel 4 umgelenkt. Der von der Antriebstrommel kommende Untertrum 1b wird um ein weiteres Messer 3 mit Sechskantquerschnitt in Richtung einer weiteren Kopfrolle 5, die nur Umlenkzwecken dient, umgelenkt. Der Kopfrolle 5 ist eine Spannrolle 6 zugeordnet.

Der Antriebstrommel 4 ist eine Umlenkrolle 7 benachbart, die auch als "Back-up-Rolle" bezeichnet wird. Sie dient der Führung des Untertrums 1b ohne Gurtspannung derart, daß der Gurt die Antriebstrommel um weit mehr als 180 ° umschlingt und bei Beginn der Drehung der Antriebstrommel eine sehr große Traktion entwick n kann, ohne daß eine Gurtspannung aufgebracht werden muß, die zu einer unerwünschten Erhöhung der Reibung zwischen den Trums und den Umlenkstäben 2 und 3 führen würde. Die radiale Anpreßkraft der Umlenkrolle ist durch den Vektor 8 angedeutet. Sie führt zu der zunächst auf die Berührungslinie zwischen Trommel 4 und Rolle 7 beschränkte Reibung, mit der die Gurttraktion eingeleitet wird.

## Patentansprüche

1. Bandförderer mit einer Einrichtung zum Ein- und Ausschleusen von Fördergut unter einem spitzen Winkel in die Förderstrecke des Bandförderers unter Verwendung von starren Umlenkstäben oder Messern, um welche ein endloser Ein- und Ausschleusgurt mit seinem Ober- und Untertrum geführt und umgelenkt wird, dadurch gekennzeichnet, daß die Querschnitte der Umlenkstäbe (2, 3) polygonal sind, und daß der Antrieb des Ein- und Ausschleusgurtes als Kopfantrieb mit einer zylindrischen Antriebstrommel (4) ausgebildet ist, wobei der Umschlingungswinkel des Gurtes auf der Antriebstrommel größer als 180 ^{o} ist.

2. Bandförderer nach Anspruch 1, dadurch gekennzeichnet, daß die Umlenkstäbe massiv ausgebildet sind.

3. Bandförderer nach Anspruch 1 oder 2, dadurch gekennzeichnet, daß der Querschnitt der Umlenkstäbe sechseckig ist.

4. Bandförderer nach einem der Ansprüche 1 bis 3, dadurch gekennzeichnet, daß zur Schaffung eines großen Umschlingungswinkels des Ein- und Ausschleusgurtes auf der Antriebstrommel dieser eine benachbarte Umlenkrolle (Back-up-Rolle) (7) zugeordnet ist.

5. Bandförder nach Anspruch 4, dadurch gekennzeichnet, daß die Position der Umlenkrolle zur Änderung des Umschlingungswinkels veränderbar ist.

## Claims

1. Band conveyer having an arrangement for the inward and outward transfer of conveyed goods at an acute angle into the conveyer section of the band conveyer using rigid deflecting bars or blades around which an endless inward and outward transfer belt is guided and deflected via its upper and lower strands, characterised in that the cross-sections of the deflecting bars (2, 3) are polygonal and that the drive of the inward and outward transfer belt is constructed as a head drive having a cylindrical driving drum (4), the angle of wrap of the belt on the driving drum being greater than 180°.

2. Band conveyer according to claim 1, characterised in that the deflecting bars are of solid construction.

3. Band conveyer according to claim 1 or 2, characterised in that the cross-section of the deflecting bars is hexagonal.

4. Band conveyer according to one of claims 1 to 3, characterised in that, for the purpose of providing a large angle of wrap of the inward and outward transfer belt on the driving drum, an adjacent deflecting roller (back-up roller) (7) is associated with the said driving drum.

5. Band conveyer according to claim 4, characterised in that the position of the deflecting roller is variable for the purpose of changing the angle of wrap.

## Revendications

1. Transporteur à bande comportant un dispositif de chargement et de déchargement du produit transporté sous un angle aigu dans le parcours de transport du transporteur à bande, recourant à des barreaux ou lames de renvoi rigides autour desquels une courroie sans fin de chargement et de déchargement est guidée et déviée par sa nappe supérieure et sa nappe inférieure, caractérisé en ce que la section transversale des barreaux de renvoi (2, 3) est polygonale et en ce que l'entraînement de la courroie de chargement et de déchargement est configuré comme entraînement de tête avec un tambour d' entraînement cylindrique (4), l'angle d'enroulement de la courroie sur le tambour d'entraînement étant supérieur à 180°.

2. Transporteur à bande selon la revendication 1, caractérisé en ce que les barreaux de renvoi sont massifs.

3. Transporteur à bande selon la revendication 1 ou 2, caractérisé en ce que la section transversale des barreaux de renvoi est hexagonale.

4. Transporteur à bande selon l'une des revendications 1 à 3, caractérisé en ce que, pour atteindre un grand angle d'enroulement de la courroie de chargement et de déchargement sur le tambour d'entraînement, un rouleau de renvoi voisin (rouleau d'appui) (7) y est associé.

5. Transporteur à bande selon la revendication 4, caractérisé en ce que la position du rouleau de renvoi peut être modifiée pour modifier l'angle d'enroulement.
